# EUROPEAN PATENT APPLICATION

(11) **EP 3 012 476 A2**
(43) Date of publication of application: **27.04.2016**
(21) Application number: 15188660.3
(22) Date of filing: 21.07.2009
(51) Int. Cl.: F16D 27/00, F16D 27/01

(54) **CLUTCH ACTUATION**

(30) Priority: 21.07.2008 GB 0813346
(62) Divisional of application: 09785368.3
(71) Applicant: Ricardo Uk Ltd., Shoreham by Sea West Sussex BN43 5FG (GB)
(72) Inventor: Wheals, Jonathan, Shoreham by Sea, West Sussex BN43 5FG (GB); McMicking, James, Shoreham by Sea, West Sussex BN43 5FG (GB); Turner, Andrew, Shoreham by Sea, West Sussex BN43 5FG (GB); Ramsey, Keith, Shoreham by Sea, West Sussex BN43 5FG (GB)
(74) Representative: McWilliams, David John

(57) **Abstract**

In a vehicle transmission, an electric linear machine is operable for controlling the position of a clutch actuator rod. A permanent magnet is housed in a cylinder at one end of the linear machine. An output member from the machine extends through the cylinder and is coupled to the actuator rod. Magnetic material is carried on the section of output member within the cylinder. Movement of the output member influences a magnetic circuit between the magnetic material and the permanent magnet material, to provide a non-powered contribution to movement of the output member, thereby reducing the load required to move the actuator rod.

## Description

The present invention relates to clutch actuation, particularly, but not exclusively to clutch actuation in automotive transmissions. More generally, the invention relates to devices and control arrangements for assisting movement of a driven output member.

A typical clutch for a vehicle transmission includes a clutch pack consisting of one or more clutch plates arranged to be clamped between a drive plate and a movable pressure plate, for the purpose of transmitting torque from a vehicle engine to a transmission input shaft. In most cases, force is applied to the pressure plate by a driven actuator element, via a clutch spring. The actuator element is required to overcome the bias of the clutch spring in order to move the pressure plate. However, a problem with such transmissions is that the actuator element typically necessitates a continuous use of energy when acting against the clutch spring, thereby reducing the overall efficiency of the transmission.

This is a particular problem for dual clutch transmissions in which, for safety reasons, both clutches are typically biased to an open state, and wherein continuously variable apply forces are required to maintain one or both clutches in a desired state of slip to ensure smooth gearshifts.

It is an object of the invention to provide an improved arrangement for clutch actuation, which addresses the problems referred to above.

According to a first aspect of the invention, there is provided a vehicle transmission having a clutch pack operable for transmitting torque, an actuator member movable to open or close the clutch pack, and a passive magnetic arrangement for assisting the movement of the actuator member during an opening or closing operation.

The passive magnetic arrangement provides non-powered contribution to movement of the actuator member during clutch actuation (i.e. when opening or closing the clutch pack to reduce or increase torque transmission). Advantageously, this reduces the input required to actuate the clutch via the actuator member. This is of particular advantage in 'normally open' type dual clutch transmissions, wherein the passive magnetic arrangement may be configured to reduce power consumption when maintaining one of the two clutches in a state of continuous slip via powered operation of the actuator member, e.g. by positioning the actuator member at one or more of a range of intermediate positions between the extremes of travel of the actuator member in order to hold, increase or reduce the level of torque transmission via the associated clutch pack.

The magnetic arrangement provides assistance 'during' an opening or closing operation (i.e. a release or apply operation), thereby providing assistance 'between' the extremes of travel of the actuator member. This is distinct from known designs of bi-stable solenoid switch, such as described in US2006/0208841, which provide only a simple latching function.

The passive magnetic arrangement preferably consists of permanent magnet material and magnetic material arranged for magnetic cooperation with one another (e.g. via forces of magnetic attraction or repulsion) in order to assist movement of the actuator member. Such an arrangement is 'passive' insofar as it does not require a power source to be operable. As such, the term 'passive' magnetic arrangement means 'non-powered' and is to be construed as distinct from an electromagnetic arrangement, e.g. in an electromagnetic switch, since the latter is only operable when the electromagnet is energised using a power source.

The actuator member is preferably arranged for powered actuation of the clutch pack (i.e. for powered movement to open or close the clutch pack), and the passive magnetic arrangement is provided in association with the actuator member to provide a non-powered contribution to the powered actuation of the clutch pack (i.e. for assisting powered movement of the actuator member during an opening or closing operation).

Preferably, a powered control device is operable for controlling the position of the actuator member across a range of intermediate positions between a clutch open position and a clutch closed position e.g. for modulating torque transmission via the clutch pack between the extremes of travel of the actuator member, wherein the passive magnetic arrangement is deployed to provide a non-powered contribution to powered movement of the actuator member between the clutch open and clutch closed positions.

The control device is effectively an energy source from which the actuator member derives input, e.g. when driving or releasing the actuator member during simple opening or closing operations or when maintaining the clutch pack in a desired state of slip or torque transmission. The passive magnetic arrangement is deployed to reduce the energy input required from the energy source when the actuator member is between the clutch open and clutch closed positions.

The control device preferably includes a prime mover or other motive device having a drive member movable between first and second positions for controlling movement of the actuator member in apply and release directions, wherein the passive magnetic arrangement is configured to reduce the load required by the prime mover during movement of the drive member.

The drive member preferably has a working stroke between said first and second positions and the passive magnetic arrangement is configured to generate a magnetic circuit to assist movement of the drive member over at least a substantial part of said working stroke.

In preferred embodiments, the prime mover is operable to drive the actuator member against biasing forces in a clutch opening or clutch closing direction during its working stroke, and wherein the magnetic circuit is configured such that a substantially constant load is required by the prime mover across at least a substantial part of said working stroke when driving against said biasing forces.

In the most preferred embodiments, the passive magnetic arrangement comprises an array of permanent magnet material and magnetic material deployed in a closing air gap arrangement, wherein a spacing between permanent magnet material and the magnetic material can be varied, for the purpose of generating or influencing a magnetic circuit between the permanent magnet material and the magnetic material.

It will be understood that a change in the spacing will bring about a change in magnetic flux between the permanent magnet material and the magnetic material. In particular, a decrease in the spacing reduces the magnetic reluctance and increases the magnetic flux, and vice versa. Advantageously, the closing air gap arrangement is deployed so that the effect of those changes in magnetic flux is experienced by the actuator member. Hence, the closing air gap arrangement provides a passive or non-powered contribution which can be harnessed to reduce the energy required to operate the actuator member between the clutch open and clutch closed positions.

In preferred embodiments, the closing air gap arrangement consists of first and second parts defining a variable spacing therebetween. The closing air gap arrangement preferably has an open condition in which the first and second parts are substantially spaced from one another, most preferably at a distance in which the effect of the magnetic circuit is negligible, and a closed condition in which the first and second parts are immediately adjacent or in contact with one another, most preferably at a distance in which the effect of the magnetic circuit is at its greatest. Movement from the open condition to the closed condition (and/or vice versa) can be used to influence movement of the actuator member.

In preferred embodiments, the first part includes, consists of or carries the permanent magnet material and the second part includes, consists of or carries the magnetic material. However, in other embodiments the first and second parts may each include, consist of or carry both permanent magnet material and magnetic material, provided that the magnetic material of said first part is arranged for magnetic cooperation with the permanent magnet material on said second part.

Said first and second parts are preferably arranged for magnetic attraction, wherein a decrease of the spacing causes an increase forces of magnetic attraction (e.g. from a position of zero or negligible effect). The forces of magnetic attraction serve to assist the relative movement between the first and second parts as the spacing decreases.

In preferred embodiments, the permanent magnet material is grounded and the magnetic material is arranged for movement relative to said permanent magnet material, in order to bring about changes in the magnetic circuit. The permanent magnet material is preferably mounted at one end of a cylinder in which the magnetic material is movably mounted. The control device preferably has an output member which extends or is extended to pass through said cylinder, wherein said magnetic material is carried on said output member or extension, so as to be movably mounted in said cylinder. The cylinder is preferably mounted at one end of the control device.

In a preferred embodiment, the control device includes a prime mover or other motive device which requires an input of energy from an external source to drive the actuator member. The closing air gap arrangement is preferably arranged for reducing the load required by the prime mover to drive the actuator member. The magnetic circuit is preferably configured so that the load required to drive the actuator member is substantially constant over its normal working stroke, e.g. during movement of the actuator member from a clutch open condition to a clutch closed condition.

In a preferred embodiment, the closing air gap arrangement is mounted adjacent, is co-housed with, or forms part of said prime mover.

The prime mover preferably includes a drive member movable to drive the actuator member between the clutch open and clutch closed positions. The closing air gap arrangement preferably includes a first part arranged for movement with the drive member, and a second part fixed relative to the drive member. The first part may form part of or be carried by the drive member, or may be separate therefrom yet arranged to move in response to movement of the drive member. In use, the magnetic flux within the closing air gap arrangement increases as the drive member moves from the first position to the second position.

Said second part preferably defines a cylinder including the permanent magnet material therein. The first part is preferably of magnetic material and is arranged for movement within said cylinder relative to said permanent magnet material. The drive member or an extension thereof preferably extends through said cylinder and said magnetic material is preferably carried on or forms part of said drive member or extension, so as to be movably mounted in said cylinder. Hence, the cylinder is preferably mounted at one end of the prime mover.

In other embodiments, a first part of the closing air gap arrangement forms part of or is carried by the actuating member and the second part of the closing air gap arrangement is deployed for cooperation with the first part. For example, the actuating member may take the form of a drive rod, piston, lever or similar device having a working stroke and including or carrying magnetic material for movement therewith (as a first part of the closing air gap arrangement), and permanent magnet material may be fixedly arranged separate from but adjacent the working stroke of the drive rod, piston or lever (as a second part of the closing air gap arrangement).

In preferred embodiments, the prime mover is an electromagnetic linear actuator having a moving magnet armature, e.g. of the kind shown in WO2007034195 (which is incorporated herein by reference), wherein the armature is intended to drive said actuator member. The closing air gap arrangement may be provided at either end of the linear actuator.

In preferred embodiments, a clutch spring is arranged for biasing the clutch pack in an open condition, in which case the closing air gap arrangement is preferably arranged to compensate for any increase in force generated by said clutch spring when the actuator member is moved to close the clutch pack. An energy storage element, such as a coil spring, is preferably used to compensate for any preload effects from the clutch pack during the initial stroke of the actuator member, e.g. to compensate for preloads from the clutch spring.

In alternative embodiments, the clutch spring is arranged for biasing the clutch in a closed condition, and the closing air gap arrangement is arranged to compensate for an increase in force generated by said clutch spring when the actuator member is moved to open the clutch.

The closing air gap arrangement may include thermally responsive means configured to bring about a change in relative position of the permanent magnet material and the magnetic material, in response to changes in temperature, e.g. to reduce the size of the air gap at high temperatures. This may include the use of a thermally expansive element or material arranged to push or pull on a part of the closing air gap arrangement, to bring about a change in the spacing between the magnetic material and the permanent magnet material.

The transmission preferably includes a lever arranged to pivot in order to open or close the clutch pack, wherein the actuator member is intended to control movement of the lever.

The clutch pack may include one or more clutch plates arranged for clamping between drive and pressure plates.

The transmission is preferably a dual clutch transmission having separately operable clutch packs, each clutch pack having an associated actuator member and closing air gap arrangement for generating or influencing a magnetic circuit to assist in movement of said actuator member.

According to another aspect of the invention, there is provided a method of controlling a clutch in a vehicle transmission, comprising powered operation of an actuator member to reduce or increase torque transmission via a clutch pack, wherein a passive magnetic arrangement provides a non-powered contribution to the powered operation of the actuator member.

The method is preferably carried out using a vehicle transmission in accordance with the first aspect of the invention.

According to another aspect of the invention, there is provided an actuator arrangement including a prime mover having an output member for driving an auxiliary mechanism, and an array of permanent magnet material and magnetic material deployed in a closing air gap arrangement for reducing the load required by the prime mover to drive the auxiliary mechanism.

Advantageously, the effect of the changes in magnetic flux from the closing air gap arrangement is experienced by the output member. Hence, the closing air gap arrangement provides a passive or non-powered contribution which can be harnessed to reduce the energy required by the prime mover to operate the output member when driving the auxiliary mechanism.

In preferred embodiments, the closing air gap arrangement consists of first and second parts defining a variable spacing therebetween. The respective parts are preferably movable from a first position in which the first and second parts are substantially spaced from one another, most preferably at a distance in which the effect of the magnetic circuit is negligible, to a second position in which the spacing is decreased, e.g. wherein the first and second parts are immediately adjacent or in contact with one another and/or the effect of the magnetic circuit is at its greatest. Hence, movement from the first position to the second position can be used to influence the movement of the output member, and reduce the load required from the prime mover.

In preferred embodiments, the first part includes, consists of or carries the permanent magnet material and the second part includes, consists of or carries the magnetic material. However, in other embodiments the first and second parts may include, consist of or carry a cooperative arrangement of both permanent magnet material and magnetic material.

Said first and second parts are preferably arranged for magnetic attraction, wherein a decrease in the spacing causes an increase forces of magnetic attraction (e.g. from a position of zero or negligible effect). The forces of magnetic attraction serve to assist the relative movement between the first and second parts as the spacing decreases.

In preferred embodiments, wherein the permanent magnet material is grounded and the magnetic material is arranged for movement relative to said permanent magnet material, in order to bring about changes in the magnetic circuit. The permanent magnet material is preferably mounted at one end of a cylinder in which the magnetic material is movably mounted. The output member or an extension thereof preferably extends through said cylinder and said magnetic material is carried on said output member or extension, so as to be movably mounted in said cylinder. Hence, the cylinder is preferably mounted at one end of the prime mover.

Preferably, the output member has an operative stroke between said first and second positions for controlling movement of said auxiliary mechanism, and wherein movement of said permanent magnet material in the direction of said magnetic material or vice versa in response to movement of the output member generates an increase in the effect of a magnetic circuit between the permanent magnet material and the magnetic material, to assist movement of said output member during its operative stroke, and thereby reduce the energy input required from the prime mover to control the auxiliary mechanism.

In preferred embodiments, the auxiliary mechanism is an actuator member in a vehicle, e.g. a rod, piston or lever arranged for operating a clutch, brake or gearshift device.

According to another aspect of the invention, there is provided a control arrangement for a device having a movable output member, the control arrangement including an array of permanent magnet material and magnetic material deployed in a closing air gap arrangement configured for influencing or generating a magnetic circuit to assist movement of said output member.

Advantageously, the effect of the changes in magnetic flux from the closing air gap arrangement is experienced by the output member. Hence, the closing air gap arrangement provides a passive or non-powered contribution which can be harnessed to reduce the energy required by the device to operate the output member.

In preferred embodiments, the closing air gap arrangement consists of first and second parts defining a variable spacing therebetween. The respective parts are preferably movable from a first position in which the first and second parts are substantially spaced from one another, most preferably at a distance in which the effect of the magnetic circuit is negligible, to a second position in which the spacing is decreased, e.g. wherein the first and second parts are immediately adjacent or in contact with one another and/or the effect of the magnetic circuit is at its greatest. Hence, movement from the first position to the second position can be used to influence the movement of the output member.

In preferred embodiments, the first part includes, consists of or carries the permanent magnet material and the second part includes, consists of or carries the magnetic material. However, in other embodiments the first and second parts may include, consist of or carry a cooperative arrangement of both permanent magnet material and magnetic material.

Said first and second parts are preferably arranged for magnetic attraction, wherein a decrease of the spacing causes an increase forces of magnetic attraction (e.g. from a position of zero or negligible effect). The forces of magnetic attraction serve to assist the relative movement between the first and second parts as the spacing decreases.

In preferred embodiments, wherein the permanent magnet material is grounded and the magnetic material is arranged for movement relative to said permanent magnet material, in order to bring about changes in the magnetic circuit. The permanent magnet material is preferably mounted at one end of a cylinder in which the magnetic material is movably mounted. The output member or an extension thereof preferably extends through said cylinder and said magnetic material is carried on said output member or extension, so as to be movably mounted in said cylinder. Hence, the cylinder is preferably mounted at one end of the prime mover.

The device is preferably arranged for driving an auxiliary mechanism and the control arrangement may be advantageously arranged to reduce the load required by the output member to work said auxiliary mechanism. The movable output member is preferably movable for operating an actuating piston, rod or lever in a vehicle transmission (e.g. for the purpose of opening or closing a clutch pack against the bias of a clutch spring). In other embodiments, the auxiliary mechanism forms part of a brake device or gear shift device.

Other aspects and preferred features of the invention will be readily apparent from the claims and following description of preferred embodiments, made by way of example only, with reference to the accompanying drawings, in which:
Figure 1 is a schematic cross-sectional view through a clutch for a vehicle transmission and an actuator having a passive closing air gap arrangement for reducing the load required to operate the clutch;
Figure 2 is a graph showing an example of the contribution that can be achieved from a closing air gap arrangement of the kind shown in Figure 1 during actuation of a clutch;
Figure 3 is an enlarged view of the actuator of Figure 1;
Figure 4 to 6 provide an example illustration of the effect of a closing air gap arrangement of the kind shown in Figures 1 and 3 during a clutch closing operation;
Figure 7 is a graph showing an example of the contribution that can be achieved from a modified closing air gap arrangement configured for counteracting a preload during actuation of a clutch;
Figure 8 is a schematic cross-sectional view through an actuator of the kind shown in Figures 1 and 3, but modified to counteract a preload from a clutch spring;
Figure 9 is a schematic cross-sectional view through another embodiment of an actuator incorporating a closing air gap arrangement;
Figure 10 is a schematic cross-sectional view through part of a modified closing air gap arrangement for use in the actuator of Figures 1 and 3 and Figures 8 or 9;
Figure 11 is a schematic cross-sectional view through part of a further modified closing air gap arrangement for use in the actuator of Figures 1 and 3 and Figures 8 or 9; ,
Figure 12 and 13 are schematic cross-sections through part of an alternative modified closing air gap arrangement for use in the actuator of Figures 1 and 3 and Figures 8 or 9;
Figure 14 is a schematic cross-sectional view through another embodiment of an actuator incorporating a closing air gap arrangement; and
Figure 15 is a schematic perspective view of a dual clutch transmission incorporating multiple the clutch and actuator arrangements.

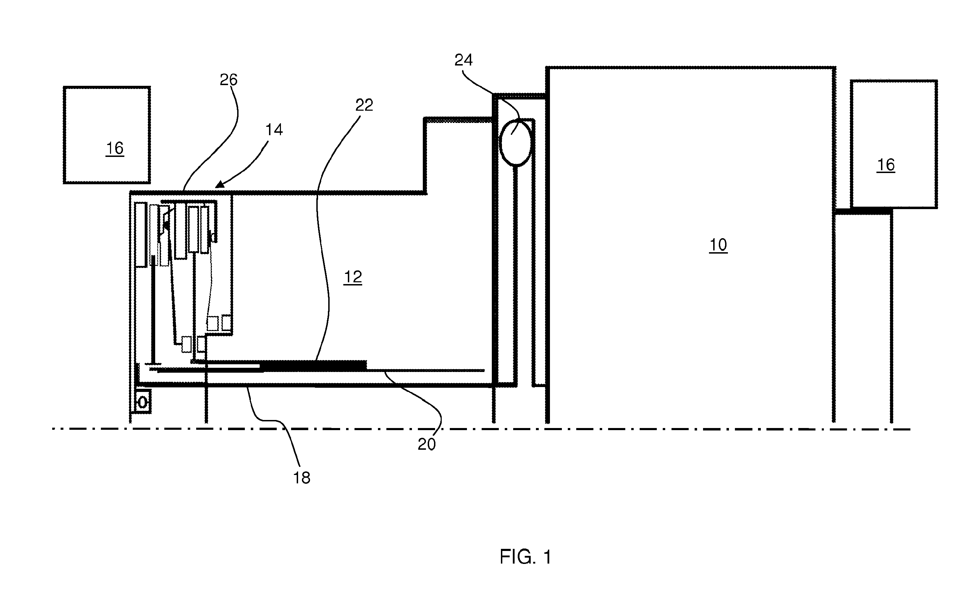

Referring to Figure 1, a clutch for a vehicle transmission is shown generally at 100. The clutch 100 is of generally conventional form, including a driven plate 102 arranged to be clamped between a drive plate 104 (e.g. a flywheel) and an axially movable pressure plate 106, for the purpose of transmitting torque from the vehicle engine (not shown) to a transmission input shaft 108. Furthermore, the clutch 100 includes a clutch spring 112 (e.g. a diaphram spring) arranged for cooperation with said pressure plate 106, for the purpose of applying or releasing a clamping load.

The transmission includes an actuator (indicated generally at 114), which is arranged for controlling movement of the pressure plate 106 between load applying and load releasing conditions, via said clutch spring 112. The actuator 114 includes an actuator member 116 which is movable between first and second positions, e.g. between a first position (as shown in Figure 1) in which the clutch 100 is open and a second position in which the clutch 100 is closed. The relative position of the actuator member 116 between said first and second positions is controllable for the purpose of modulating torque transmission.

The actuator member 116 is arranged to act on one end of a pivotable lever 118. The opposite end of the lever 118 is arranged to act on an apply/release bearing 120, and said bearing 120 is arranged to act directly on the clutch spring 112.

In this embodiment, the clutch spring 112 acts to bias the clutch 100 to a normally open condition. In use, movement of the actuator member 116 from the first position to the second position causes the lever 118 to pivot in a first direction and thereby drive the bearing 120 against the bias of the clutch spring 112 for the purpose of closing the clutch 100, whereas movement of the actuator member 116 from the second position to the first position causes the lever 118 to pivot in a second direction and thereby permit the bearing 120 to move with the bias of the clutch spring 112 for the purpose of allowing the clutch 100 to open. However, an opposite arrangement may be preferred, i.e. wherein the clutch is biased to a normally closed condition etc.

In this embodiment, the actuator member 116 is arranged for linear movement, left to right (and vice versa), as viewed in Figure 1. However, rotary or translational movement of the actuator member 116 may be preferred.

The actuator 114 includes a prime mover or other motive means having an output or drive member arranged for controlling powered movement of the actuator member 116, i.e. movement of the output member causes movement of the actuator member 116.

In the embodiment of Figure 1, the prime mover is an electromagnetic linear actuator incorporating a moving magnet armature 140, e.g. of the kind described in WO2007/034195 (the content of which is incorporated herein by reference). The armature 140 carries permanent magnets 142 and is reciprocable within the bore 144 of a stator 146 having a plurality of coils 148. The stator 146 is configured so as to define air gaps 150 between the coils 148 and the armature 140. However, operation of the armature 140 is discussed in detail in WO2007034195 and so will not be described here.

The drive member consists of, forms part of, or is coupled for movement with said moving magnet armature, such that movement of the actuator member 116 corresponds to or is proportional to the movement of the armature 140.

Advantageously, the actuator 114 includes a passive magnetic arrangement (indicated generally at 130 in Figure 1), which is configured for providing a passive, non-powered contribution to the powered movement of the actuator member 116. More particularly, the actuator 114 includes a closing air gap arrangement of permanent magnet material and magnetic material deployed for reducing the load required by the prime mover to drive the actuator member 116.

As will be described in more detail below, a spacing between the permanent magnet material and the magnetic material can be varied, for the purpose of generating or influencing a magnetic circuit between the permanent magnet material and the magnetic material. A change in the spacing results in a change in magnetic flux between the permanent magnet material and the magnetic material. In particular, a decrease in the spacing reduces the magnetic reluctance of the circuit (thereby increasing the magnetic flux), and vice versa.

The effect of the changes in magnetic flux from the closing air gap arrangement is harnessed to reduce the energy required to operate the actuator member 116. In particular, an attractive force is harnessed to counter-act the effect of the clutch spring 112 and any clamp loads generated by the clutch pack during the apply stroke of the actuator member 116. The force required to operate the lever 118 to overcome the clutch spring 112 increases over a significant proportion of the working stroke of the actuator member 116, under normal operating conditions. However, the magnetic circuit is preferably configured so that the force required from the prime mover over the working stroke of the actuator member 116 is substantially reduced, and more preferably is constant or substantially constant across at least a substantial part of the working stroke of the actuator member 116 (e.g. corresponding to the working stroke of the drive member 140 of the actuator 114).

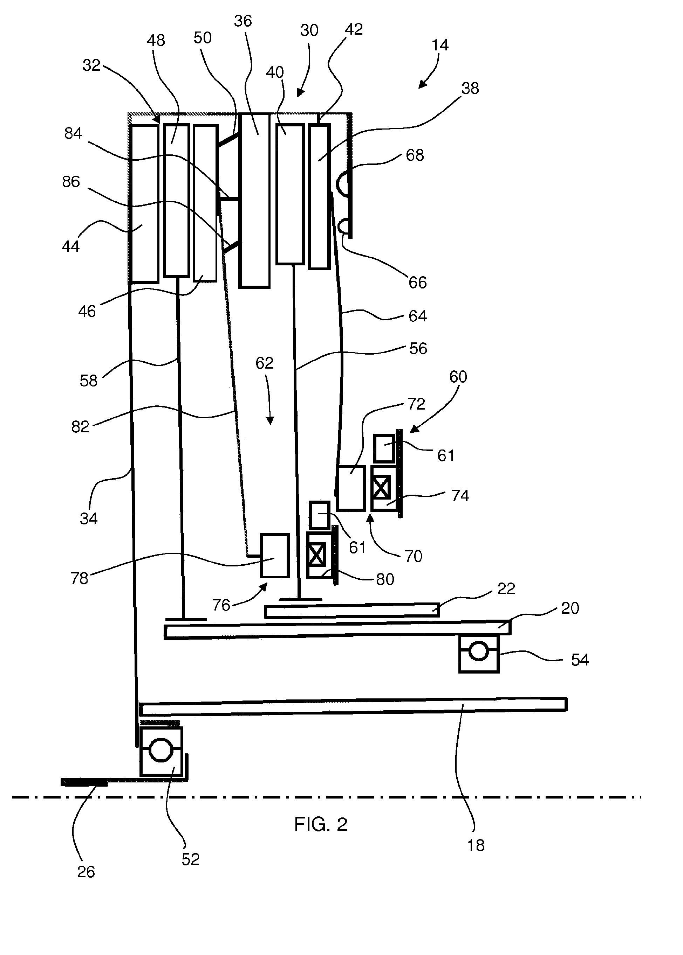

In the illustrated embodiment, it is preferred if the net force from the actuator 114 under passive (i.e. non-powered) conditions is always less than the return force from the clutch spring 112. This is indicated in Figure 2, in which the load from the clutch spring 112 over a given stroke of the apply bearing 120 in an apply direction is shown by line 122, the assistance load from the passive device over the same stroke is shown by line 124, and the resultant load required by the prime mover over the same stroke is shown by line 126. Hence, if the prime mover for the actuator 114 fails, the clutch 100 will always return to an open position. In other embodiments, the passive device may be configured to provide a magnetic force greater than the bias of the clutch spring 112, e.g. to provide a latching function.

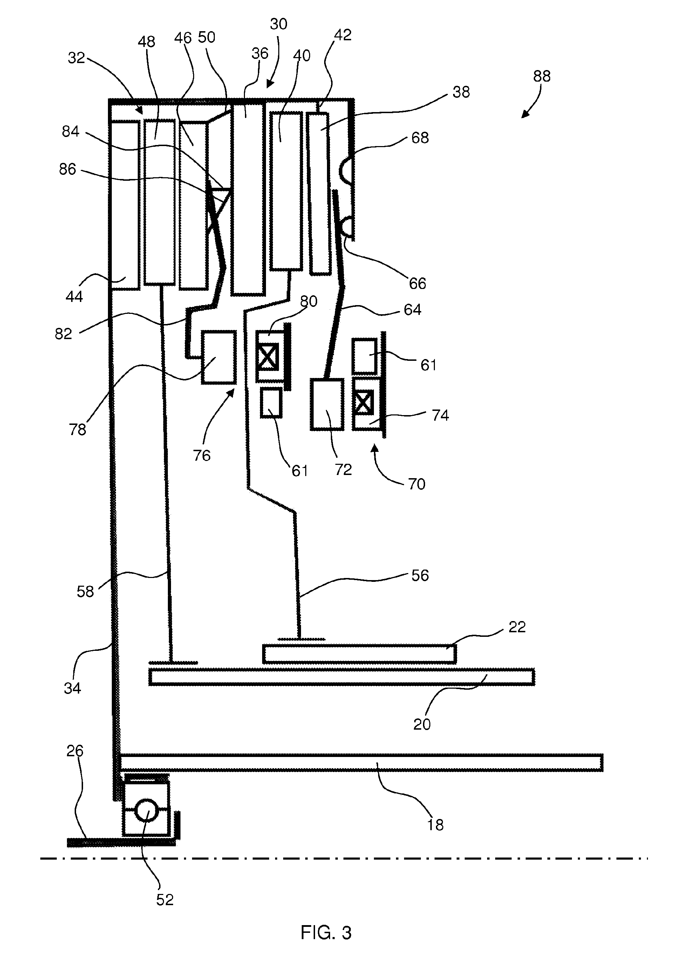

The passive arrangement can be seen most clearly in Figure 3 and includes a first part 132 which is arranged for movement with the drive member of the actuator 114 (i.e. said moving magnet armature 140). In this embodiment, the first part 132 is coupled to an output rod 152 which extends from said armature 140, so as to be movable with said armature 140. The output rod 152 may otherwise be an integral extension of the armature 140.

The passive arrangement 130 further includes a second part 134 which is fixed relative to the armature 140. The passive arrangement 130 is configured so that when said armature 140 is in a first position, the movable part 132 is spaced from said fixed part 134, and wherein movement of said armature 140 to a second position causes the movable part 132 to move towards said fixed part 134, preferably to a position proximal or in abutment with said fixed part 134.

Permanent magnets are typically dense, brittle and susceptible to shock. Hence, in the preferred embodiment of Figure 3, the permanent magnet material forms the fixed part 134 (which is grounded) and said movable part 132 provides the magnetic material for the magnetic circuit.

In this embodiment, the actuator member 116 is an integral extension of the movable part 132. However, in other embodiments the actuator member 116 may be a separate components which is coupled for movement with or in response to movement of the movable part 132.

The fixed part 134 is preferably concentric with said armature 140 and more preferably defines an annulus through which said output rod 152 is movable. Preferably, the output rod 152 is of non-magnetic material, so as to prevent interference with the magnetic circuit.

The passive arrangement 130 and stator 146 are co-mounted in a housing 128, wherein the passive arrangement 130 is located adjacent the output end of the stator 146, to the left as viewed in Figure 3. In other embodiments, the device may be located at an opposite end of the prime mover.

The ends of the stator 146 are preferably of non-magnetic material, to prevent interference with the magnetic circuit. The housing 128 defines a bore 154 in which the moving part 132 is reciprocably received. The moving part 132 is preferably concentric with the armature 140 and the bore 154 preferably provides a running surface for the axial movement of the moving part 132 for maintaining concentricity. In one embodiment, the running surface includes axially arranged splines 156 configured for engagement with an outer surface of the moving part 132, to prevent rotation thereof.

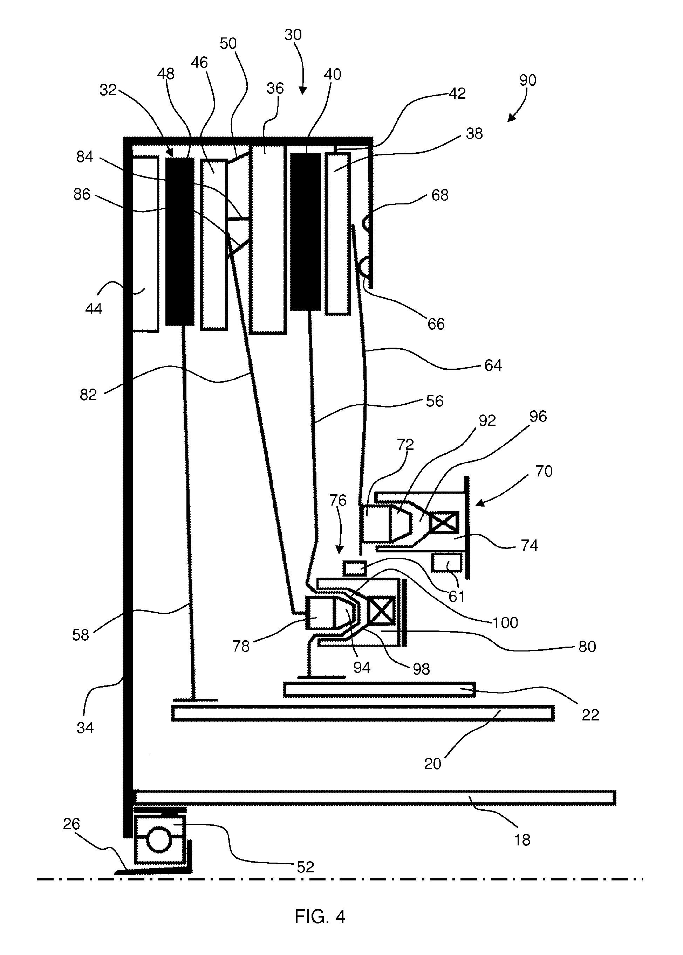

Figures 4 to 6 show examples of the change in effect of the magnetic circuit that may be brought about by closing the air gap between the magnetic material and the permanent magnet material in the passive arrangement device 130. Curve 160 represents the force required to operate the lever 118 against the action of the clutch spring 112, curve 162 represents the contribution from the magnetic circuit as the air gap decreases, and curve 164 represents the resultant load required by the prime mover. Line 166 represents the position of the armature 140 along its working stroke.

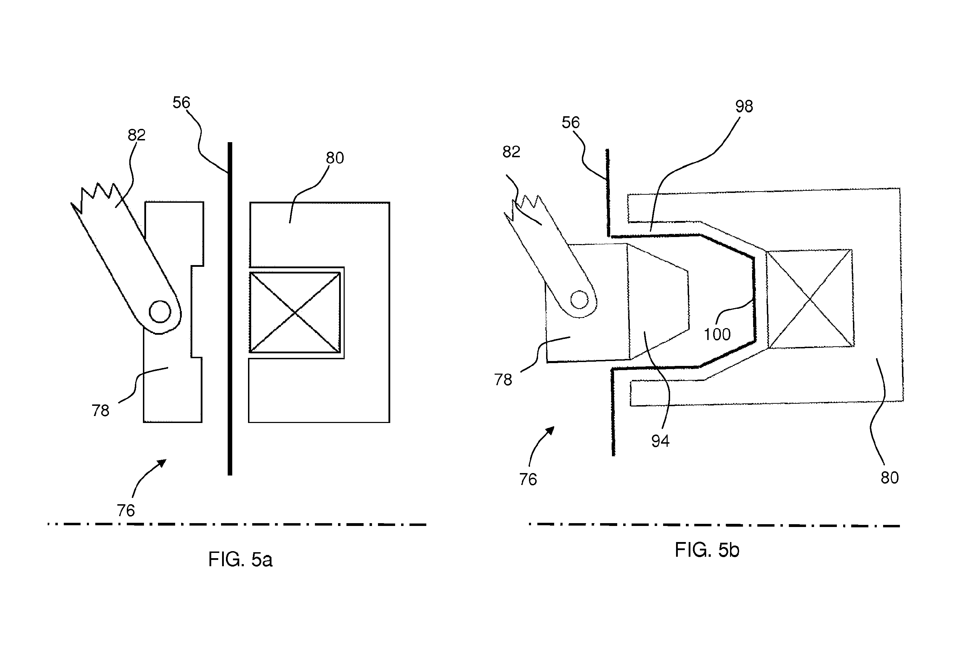

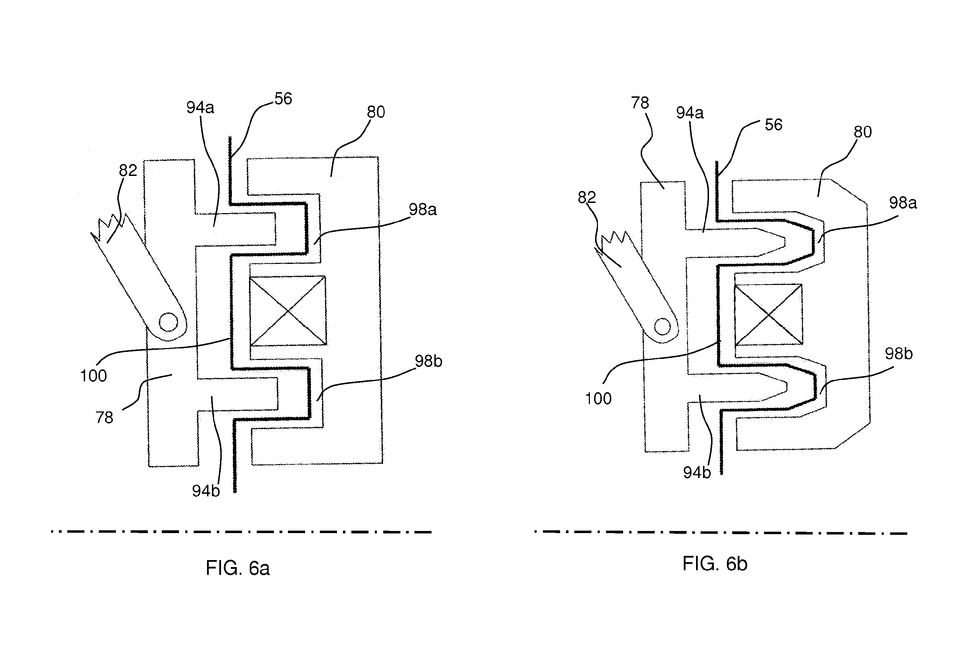

In Figure 4, the armature 140 is at the beginning of its stroke and the air gap 158 is at its maximum. Hence, the contribution from the magnetic circuit is at its weakest (and may be zero or negligible). Between Figures 4 and 5, the armature 140 moves along its stroke, thereby reducing the air gap and increasing the contribution from the magnetic circuit. In Figure 6, the armature 140 has reached the end of its stroke and the air gap is fully closed, such that the contribution from the magnetic circuit is substantially at its greatest.

It will be understood that the increase in magnetic force from the arrangement 130 is used to compensate for the increase in force required to operate the lever against the spring 112, wherein energy is effectively switched from the clutch spring 112 to the magnets 134. The flux characteristic of the magnetic circuit is preferably configured such that a substantially constant load is required from the prime mover across all or a substantial part of the stroke.

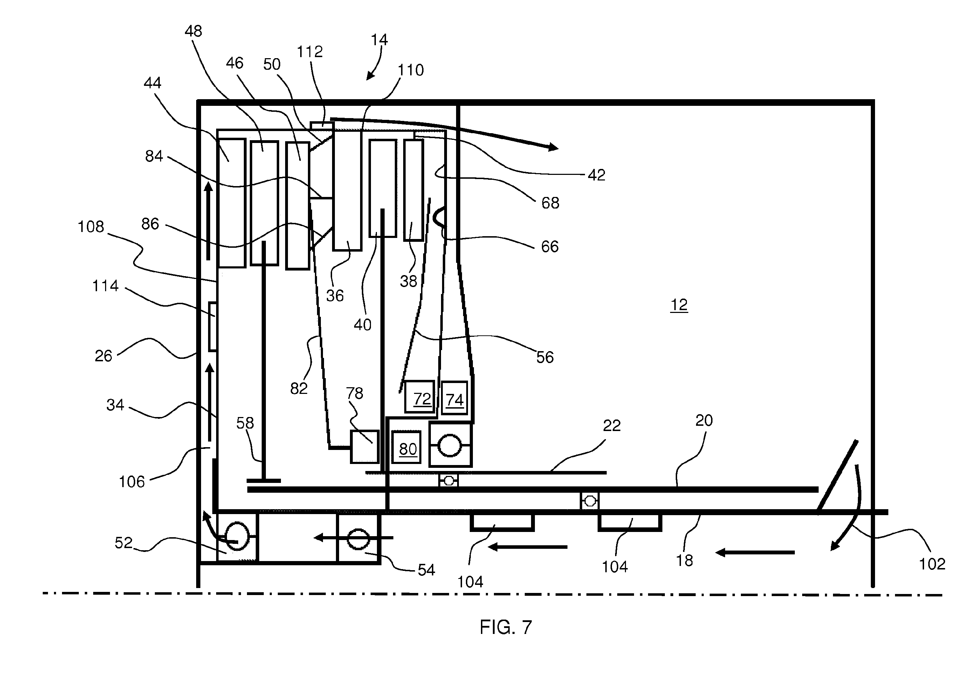

Different clutches may exhibit different clutch spring characteristics. In Figure 7, the characteristic of a clutch spring over the working stroke of the apply bearing 120 is indicated by curve 170. As can be seen, the clutch spring provides a significant preload at the beginning of the working stroke of the bearing 120, which drops away dramatically during the initial movement of the bearing 120. Whilst the contribution from the magnetic circuit, e.g. as indicated by curve 172 in Figure 7, can be used to counter act the increase in force from the clutch spring towards the end of the stroke, the magnetic circuit is not able to contribute significantly when the air gap is at its maximum (i.e. at the beginning of the stroke). Hence, an additional energy store is required to compensate for the preload effect of the clutch spring.

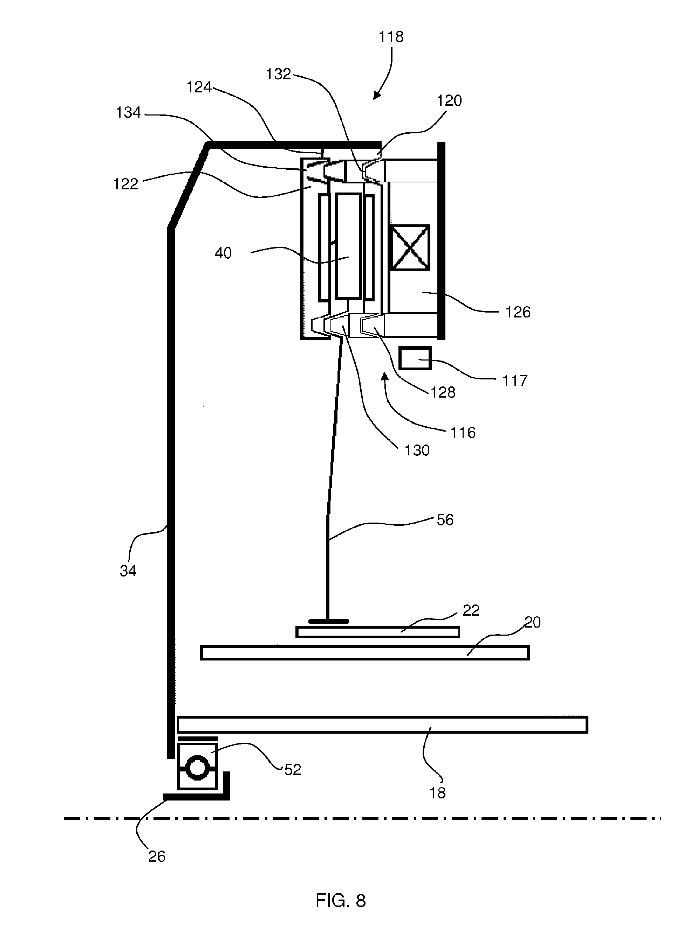

An example is shown in Figure 8, wherein the passive arrangement 130 includes a coil spring arranged to react against the initial preload of the clutch spring. The characteristic of the coil spring is preferably the same as or similar to the initial characteristic of the clutch spring, for example as shown by curve 174 in Figure 7. The resultant load required by the actuator is indicated by curve 176. Of course, other forms of energy store may be used as an alternative to the coil spring of Figure 8.

It can be seen that the output rod 150 is an integral part of the armature 140 and also defines the actuator member (previously assigned reference numeral 116). The moving part 132 of the passive arrangement 130 is fixed for movement with the rod 150. In this embodiment, permanent magnets 180 are attached to the moving part 132 and the fixed part 134 includes an insert 182 of magnetic material. These features may be substituted for the corresponding features in the embodiment of Figure 3, and vice versa.

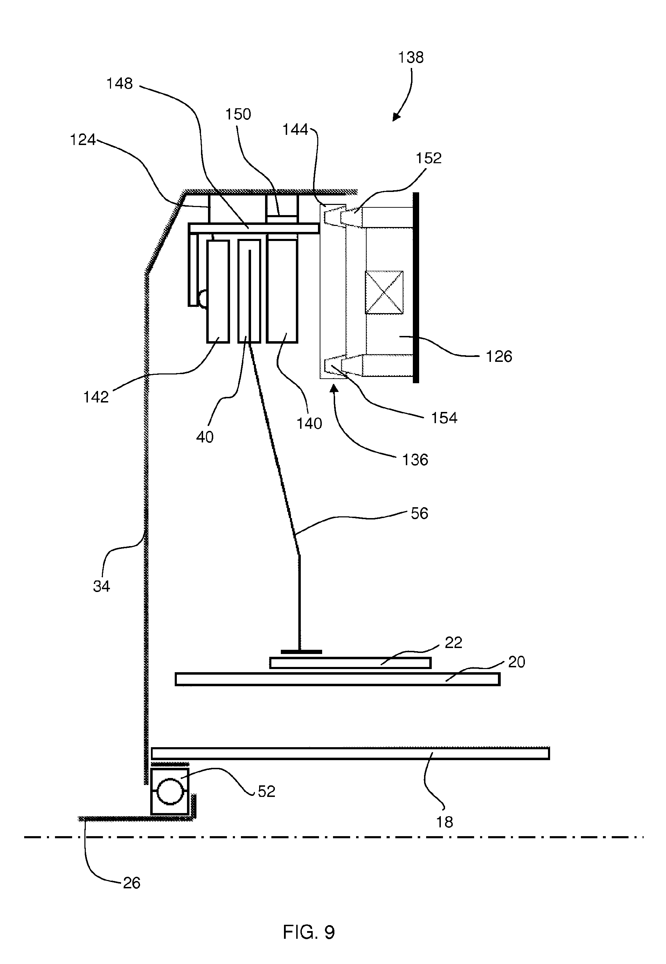

Figure 9 shows an alternative embodiment, wherein the prime mover is in the form of a motor 188 (brushed or brushless) having a rotary output 190 which cooperates with an epicyclic gear arrangement 192 fixed against rotation for driving a ball screw 194, in order to push or pull the output member 116. Rotation of the output 190 in a first direction (e.g. clockwise) will cause the ball screw 194 to move in a first axial direction along a threaded output shaft 196 (e.g. to the left as viewed in Figure 9), whereas rotation of the output 190 in the opposite rotary sense will cause the ball screw to move in an opposite axial direction along shaft 196, e.g. to the right as viewed in Figure 9). In this embodiment, the moving part 132 is arranged between the fixed part 134 and the output shaft 196 of the prime mover. The moving part 132 is preferably of magnetic material and the fixed part 134 is preferably one or more permanent magnets.

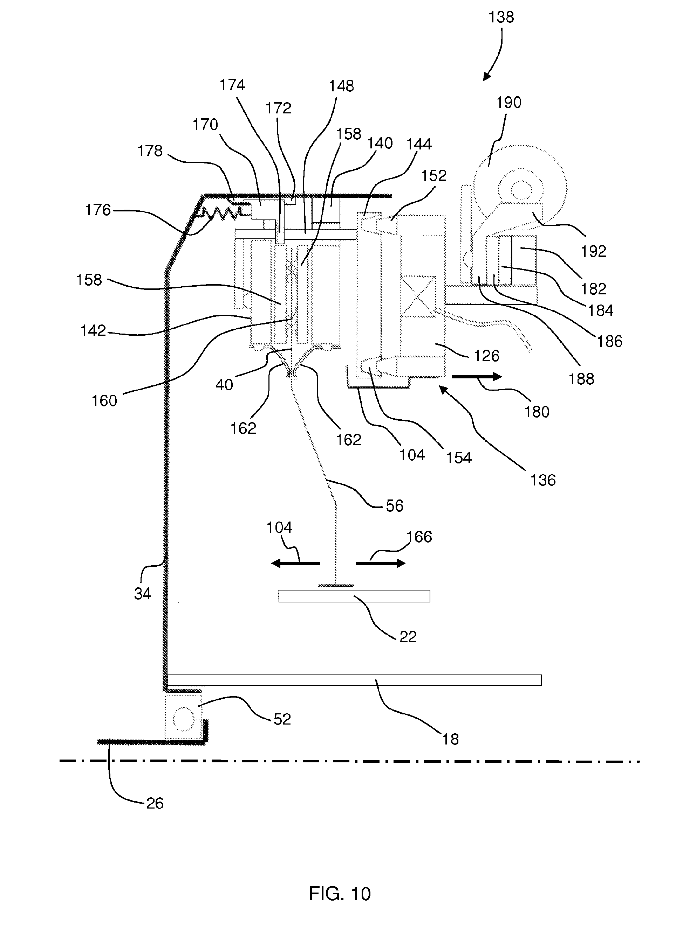

Figure 10 shows a modified closing air gap arrangement. In common with the other embodiments of Figures 3, 8 and 9, it can be seen that the moving part 132 includes a leading portion 133, which extends axially and defines a bore 135 in which the fixed part 134 may be located during use. In the embodiment of Figure 3, for example, the magnetic material in the leading portion is of uniform width. However, in the embodiment of Figure 10, the profile of the leading portion 133 is modified to include a region 137 of reduced width (e.g. formed by an annular recess or series of spaced cut outs). By altering the profile of the magnetic material, the magnetic reluctance of the circuit can be increased or decreased, thereby modifying the force/displacement characteristic of the magnetic circuit. As illustrated, the reduction or removal of magnetic material provides a profile which promotes flux saturation of the magnetic material, in a manner which can be used to overcome the potentially deleterious effects of temperature increases on the magnetic circuit.

It should be understood that the leading portion 133 of the moving parts 132 from Figures 3, 8 and 9 may be omitted, although this may decrease the overall force capability of the magnetic circuit.

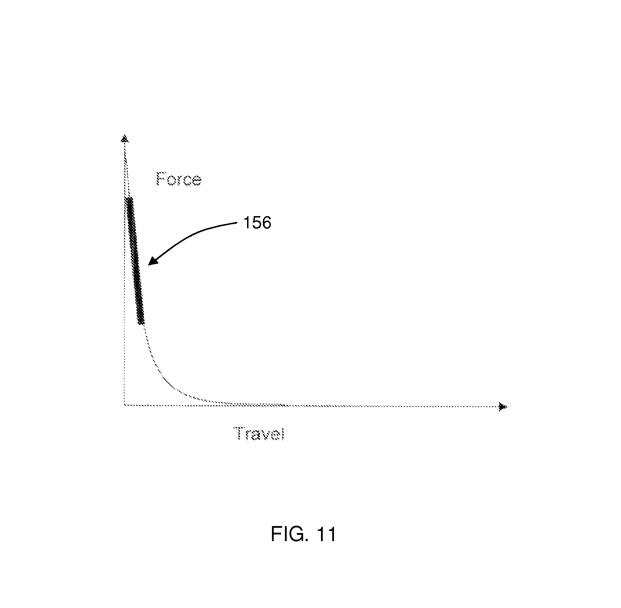

Figure 11 shows examples of other modifications that can be applied to the types of closing air gap arrangements described above. For example, the fixed part 134 comprises a main body 133 which defines a cylindrical bore 135 of magnetic material. Permanent magnet material 220 is grounded within the bore 135. A mass of magnetic material forming the moving part 132 of the closing air gap arrangement is reciprocable within the bore 135. In particular, the mass of magnetic material 132 is mounted for movement with an output member 152 of a prime mover (e.g. the moving magnet armature of Figure 3).

Although the permanent magnet material 220 is fixed within the cylinder 133, the fixed part 134 may be movable under predetermined temperature conditions, e.g. to overcome the deleterious effect of increases in temperature on the magnetic circuit.

Preferably, a thermally responsive element is arranged for moving the otherwise fixed part 134 of the air gap arrangement towards the moving part 132. In this embodiment, a thermally expansive material 222 is arranged between the end wall 224 of the cylinder 133 and an externally grounded element 226 (e.g. part of the housing 128). If the temperature within or adjacent the closing air gap arrangement increases above a predetermined threshold, the material 222 will expand, causing the cylinder 133 to move axially and thereby reduce the size of the air gap.

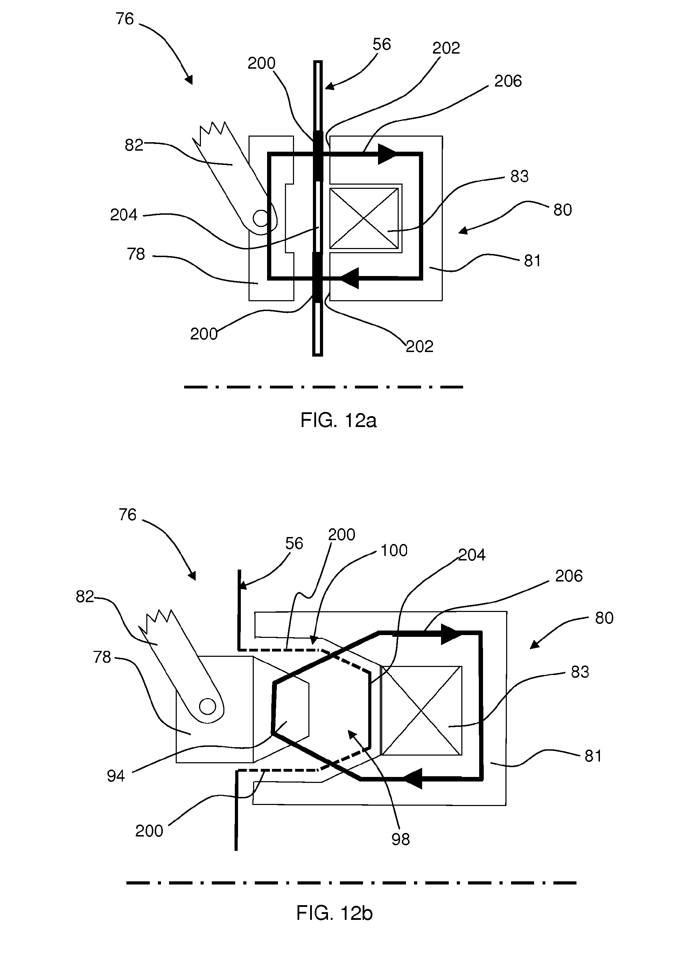

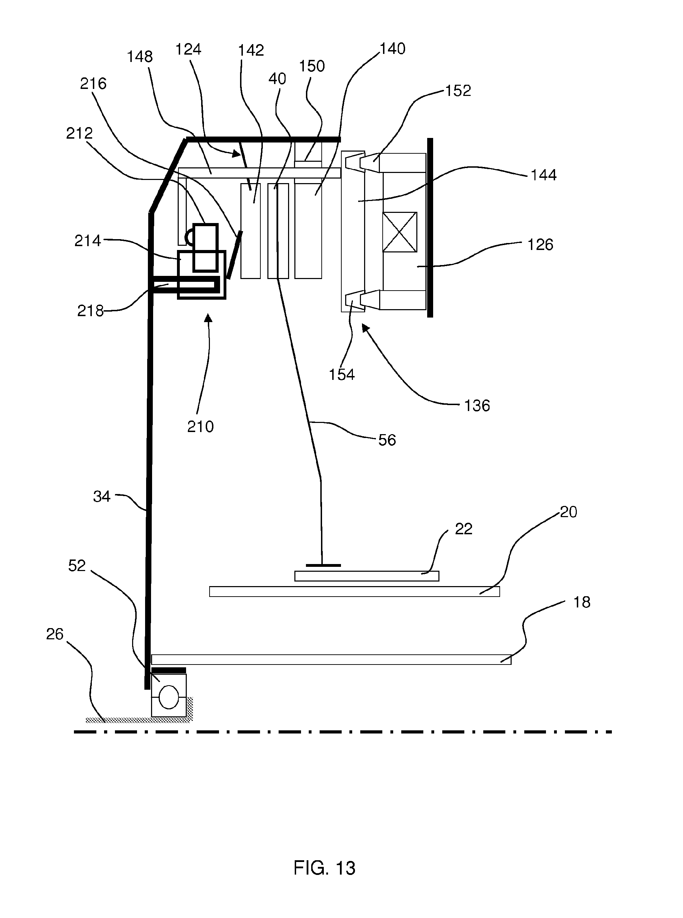

An alternative adjustment mechanism is shown in Figure 12, wherein the fixed part 134 may be selectively moved in an axial direction (to the left or right, e.g. as shown in Figure 13) within the housing 128, e.g. by means of a worm drive 137 (preferably driven by a stepper motor - not shown) arranged in communication with teeth or other cooperative formations 139 provided on the fixed part 134.

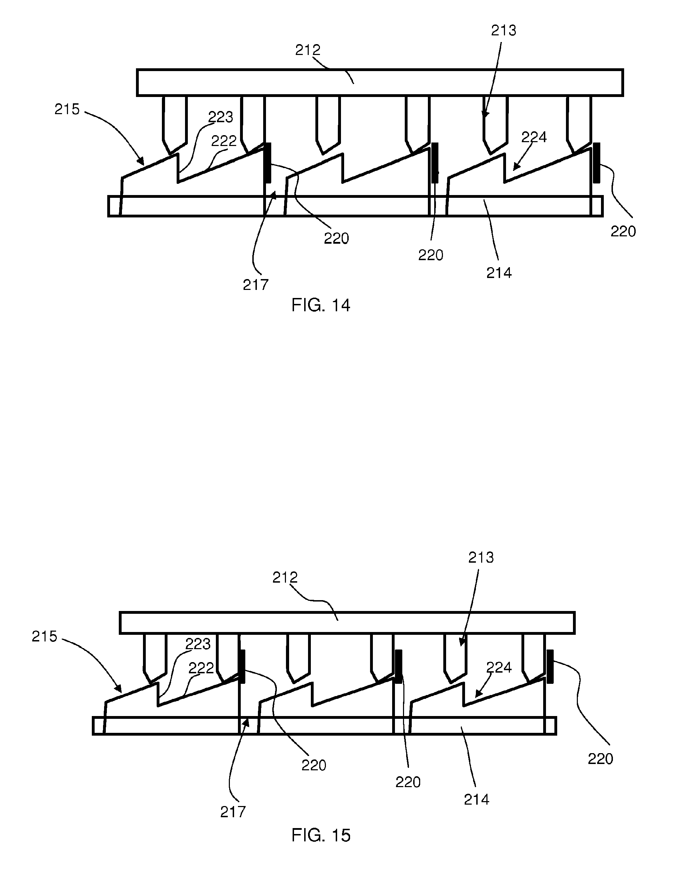

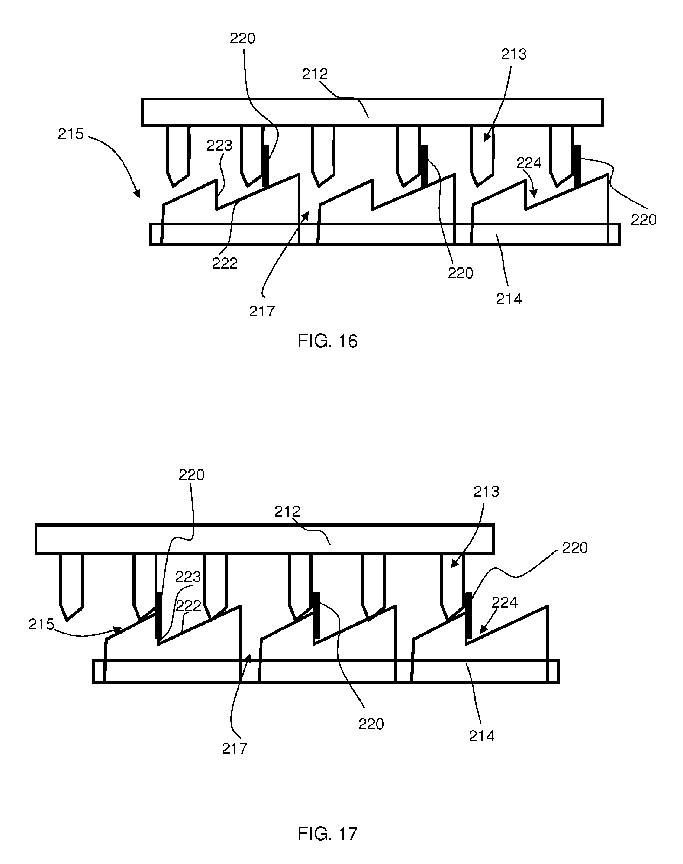

Another embodiment of an actuator 130 having a prime mover and non-powered assist arrangement is shown in Figure 14. In this example, an electromagnetic linear actuator has a permanent magnet armature 140 which is reciprocably received in an electromagnetic stator 146, and is operable for controlling movement of an actuator rod 116, e.g. for the purpose of torque modulation. A passive magnetic assist arrangement is provided at one end of the stator 146 (to the left as viewed in Figure 14) in association with the armature and actuator rod 116. The linear actuator and passive magnetic arrangement are sealingly housed together in a cylindrical actuator housing 128.

In this embodiment, permanent magnet material 180 is mounted at one end of a grounded cylinder 134, which defines a bore into which a section of magnetic material 132 is movably received between first and second positions. The cylinder 134 is mounted adjacent one end of the stator 146, and an extension 152 of the armature 140 passes through the cylinder 134 and out of the housing 128 for connection to the actuator rod 116. Movement of the armature 140 causes movement of the actuator rod 116. Moreover, the magnetic material 132 is carried on the extension 152, such that movement of the armature 140 will bring about a corresponding change in the spacing between the magnetic material 132 and the permanent magnet material 180.

The passive magnetic arrangement is configured to reduce the load required by the linear actuator during movement of the actuator rod 116. In particular, the armature 140 has a working stroke corresponding to the first and second positions of the magnetic material 132 relative to the permanent magnet material 180, and the passive magnetic arrangement is configured to generate a magnetic circuit to assist movement of the armature 140 over at least a substantial part of said working stroke, more preferably to ensure that a substantially constant load is required across at least a substantial part of said working stroke when driving the actuator rod 116.

A spring element 178 is provided in the actuator housing 128, in association with the extension 152, to compensate for preload effects from the clutch pack during the initial stroke of the actuator rod 116.

Figure 15 shows a dual clutch transmission 210 which incorporates two clutches of the type shown in Figure 1. The two clutches are housed in a common clutch pack housing 212 and two of said actuators 114 are arranged in a spaced relationship therewith. The input shafts, lay shafts, and differential output for the transmission are indicated at 214, 216 and 218 respectively. The actuators 114 include a housing for the prime mover 140 and the passive assistance device 130.

The preferred embodiments described above utilise a passive arrangement of permanent magnet material and magnetic material arranged for cooperation with one another to generate a magnetic circuit, the effect of which is harnessed to assist movement of a driven member (e.g. the actuator member 116) across a range of intermediate positions along the working stroke of the driven member, more preferably over at least a substantial part of said working stroke. It will be understood that this is wholly distinct from a simple magnetic latch intended to hold an object in a desired position, e.g. at the end of its working stroke.

Although the closing air gap arrangement in each of the Figures consists of first and second parts defining a variable spacing therebetween, wherein the first part consists of permanent magnet material and the second part consists of said magnetic material, in other embodiments the arrangement may be configured such that said first and second parts include both permanent magnet material and magnetic material, i.e. wherein the permanent magnet material on said first part is arranged for magnetic cooperation with the magnetic material on said second part and the magnetic material on said first part is arranged for cooperation with the permanent magnet material on said second part.

The preferred embodiments have been described with reference to closing air gap arrangements incorporating a juxtaposition of permanent magnet material and magnetic material. The type of permanent magnet material may be of any conventional form, e.g. sintered or bonded ceramic ferrite composites, Alnico magnets, Ticonal magnets, injection moulded magnets, flexible magnets or rare earth (lanthanoid) magnets. The type of magnetic material may be any ferromagnetic material, most preferably a ferrite steel.

Although the Figures show a clutch having a single driven plate, it will be understood that the invention is applicable to single or multi-plate clutch packs, wherein the control actuator includes permanent magnetic material deployed to create an attracting or repelling force, which is harnessed so as to counter-act the effect of the clutch spring.

Although described with reference to a prime mover in the form of an electromagnetic linear actuator, the invention is applicable to other forms of prime mover or motive device, for example an hydraulic or pneumatic piston, a brushless motor or manually operated mechanical device or linkage.

The passive magnetic arrangements described above are not only applicable to powered clutch control applications. More generally, they are applicable to control or actuator arrangements having an output member intended for operation of an auxiliary mechanism, e.g. a clutch, brake or other mechanical device, wherein the passive magnetic arrangement may be advantageously arranged to reduce the load required to work said auxiliary mechanism via the output member. This includes electrically powered output members, hydraulically or pneumatically powered output members, and mechanically arrangements which require manual operation of the output member, e.g. via a lever or pedal.

## Claims

1. An actuator arrangement comprising a prime mover having an output member for driving an auxiliary mechanism, and an array of permanent magnet material and magnetic material deployed in a closing air gap arrangement for reducing the load required by the prime mover to drive the auxiliary mechanism.

2. The actuator arrangement of claim 1, wherein the closing air gap arrangement consists of first and second parts defining a variable spacing therebetween.

3. The actuator arrangement of claim 2, wherein the respective parts are movable from a first position in which the first and second parts are substantially spaced from one another, most preferably at a distance in which the effect of the magnetic circuit is negligible, to a second position in which the spacing is decreased, e.g. wherein the first and second parts are immediately adjacent or in contact with one another and/or the effect of the magnetic circuit is at its greatest.

4. The actuator arrangement of claim 2 or claim 3, wherein the first part includes, consists of or carries the permanent magnet material and the second part includes, consists of or carries the magnetic material, or wherein the first and second parts include, consist of or carry a cooperative arrangement of both permanent magnet material and magnetic material.

5. The actuator arrangement of any of claims 2 to 4, wherein the first and second parts are arranged for magnetic attraction, wherein a decrease in the spacing causes an increase forces of magnetic attraction (e.g. from a position of zero or negligible effect).

6. The actuator arrangement of any previous claim, wherein the permanent magnet material is grounded and the magnetic material is arranged for movement relative to said permanent magnet material, in order to bring about changes in the magnetic circuit.

7. The actuator arrangement of any previous claim wherein the permanent magnet material is mounted at one end of a cylinder in which the magnetic material is movably mounted.

8. The actuator arrangement of any previous claim wherein the output member or an extension thereof extends through said cylinder and said magnetic material is carried on said output member or extension, so as to be movably mounted in said cylinder.

9. The actuator arrangement of any previous claim wherein the output member has an operative stroke between said first and second positions for controlling movement of said auxiliary mechanism, and wherein movement of said permanent magnet material in the direction of said magnetic material or vice versa in response to movement of the output member generates an increase in the effect of a magnetic circuit between the permanent magnet material and the magnetic material, to assist movement of said output member during its operative stroke, and thereby reduce the energy input required from the prime mover to control the auxiliary mechanism.

10. A control arrangement for a device having a movable output member, the control arrangement including an array of permanent magnet material and magnetic material deployed in a closing air gap arrangement configured for influencing or generating a magnetic circuit to assist movement of said output member.

11. The control arrangement of claim 10 wherein the closing air gap arrangement consists of first and second parts defining a variable spacing therebetween.

12. The control arrangement of claim 11 wherein the respective parts are movable from a first position in which the first and second parts are substantially spaced from one another, most preferably at a distance in which the effect of the magnetic circuit is negligible, to a second position in which the spacing is decreased, e.g. wherein the first and second parts are immediately adjacent or in contact with one another and/or the effect of the magnetic circuit is at its greatest.

13. The control arrangement of claim 11 or claim 12 wherein the first part includes, consists of or carries the permanent magnet material and the second part includes, consists of or carries the magnetic material, or wherein the first and second parts include, consist of or carry a cooperative arrangement of both permanent magnet material and magnetic material.

14. The control arrangement of any of claims 11 to 13 wherein the first and second parts are arranged for magnetic attraction, wherein a decrease of the spacing causes an increase forces of magnetic attraction (e.g. from a position of zero or negligible effect).

15. A vehicle transmission incorporating the actuator arrangement of any of claims 1 to 9.
